(19) **Europäisches Patentamt / European Patent Office / Office européen des brevets**

(11) **EP 4 501 655 A1**

(12) **EUROPEAN PATENT APPLICATION**
published in accordance with Art. 153(4) EPC

(43) Date of publication:
05.02.2025  Bulletin 2025/06

(21) Application number: 23774184.8

(22) Date of filing: 05.01.2023

(51) International Patent Classification (IPC):
*B41M 5/00* (2006.01)　　　　*B41M 5/52* (2006.01)
*B41J 2/01* (2006.01)

(52) Cooperative Patent Classification (CPC):
B41J 2/01; B41M 5/00; B41M 5/52

(86) International application number:
PCT/JP2023/000102

(87) International publication number:
WO 2023/181583 (28.09.2023 Gazette 2023/39)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:　24.03.2022　JP 2022048836

(71) Applicant: **FUJIFILM Corporation
Tokyo 106-8620 (JP)**

(72) Inventors:
• **OSHIMA, Yasuhito
  Ashigarakami-gun, Kanagawa 258-8577 (JP)**
• **MURAI, Daigo
  Ashigarakami-gun, Kanagawa 258-8577 (JP)**

(74) Representative: **HGF
HGF Limited
1 City Walk
Leeds LS11 9DX (GB)**

(54) **INKJET RECORDING METHOD**

(57)　An ink jet recording method including, in the following order, a step of applying an ink containing a colorant and water onto an A surface which is one surface of a paper substrate by an ink jet recording system, a step of irradiating the A surface to which the ink has been applied with infrared rays having a maximal wavelength in a range of 800 nm to 3,000 nm, and a step of applying a post-treatment liquid containing water and a surfactant onto a B surface which is the other surface of the paper substrate, in which the paper substrate includes a pulp layer and a coating layer, the coating layer is disposed on an A surface side and a dry coating amount of the coating layer disposed on the A surface side is 15 g/m² to 50 g/m², and the coating layer is not disposed on a B surface side, or in a case where the coating layer is disposed on the B surface side, a dry coating amount of the coating layer disposed on the B surface side is 10 g/m² or less.

**Description**

BACKGROUND OF THE INVENTION

1. Field of the Invention

The present disclosure relates to an ink jet recording method.

2. Description of the Related Art

In recent years, in a method of recording an image using an aqueous ink containing water, improvement of various performances of an obtained image recorded material has been studied.

For example, JP2017-124561A describes an image forming method of forming an image by jetting liquid droplets onto a recording medium, the image forming method including jetting a post-treatment liquid onto an image of the recording medium on which at least the image has been formed, specifying a region that overlaps a region where the image of the recording medium is formed; and jetting the post-treatment liquid onto the specified region. JP2020-164333A describes a post-treatment device including a post-treatment part that performs post-treatment of a recording medium recorded by a water-based ink, a placing part on which the recording medium to be subjected to the post-treatment by the post-treatment part is placed, a deformation suppression unit that suppresses a deformation of the recording medium in the placing unit, the deformation being caused by a predetermined parameter related to a recording processing on the recording medium, and a controller that controls the deformation suppression unit based on the predetermined parameter, in which the controller receives the predetermined parameter from a printer controller that controls recording, and changes a suppression intensity of the deformation suppression unit with respect to the recording medium based on the predetermined parameter, and the predetermined parameter includes information based on a condition in a case where recording is performed on the recording medium.

SUMMARY OF THE INVENTION

However, in some cases, it is required to suppress the occurrence of breakage in a case where the image recorded material is folded.

The present disclosure has been made in consideration of such circumstances, and according to an embodiment of the present invention, there is provided an ink jet recording method capable of suppressing occurrence of breakage in a case where an image recorded material is folded.

The present disclosure includes the following aspects.

<1>
An ink jet recording method comprising, in the following order,

> a step of applying an ink containing a colorant and water onto an A surface which is one surface of a paper substrate by an ink jet recording system,
> a step of irradiating the A surface to which the ink has been applied with infrared rays having a maximal wavelength in a range of 800 nm to 3,000 nm, and
> a step of applying a post-treatment liquid containing water and a surfactant onto a B surface which is the other surface of the paper substrate,
> in which the paper substrate includes a pulp layer and a coating layer which is disposed on at least one surface of the pulp layer,
> the coating layer contains at least one white pigment selected from the group consisting of calcium carbonate and kaolin, and a binder,
> the coating layer is disposed on an A surface side and a dry coating amount of the coating layer disposed on the A surface side is 15 g/m$^2$ to 50 g/m$^2$, and
> the coating layer is not disposed on a B surface side, or in a case where the coating layer is disposed on the B surface side, a dry coating amount of the coating layer disposed on the B surface side is 10 g/m$^2$ or less.

<2>
The inkjet recording method according to <1>, in which the infrared rays are near-infrared rays having a maximal wavelength in a range of 800 nm to 1,400 nm.
<3>
The ink jet recording method according to <1> or <2>, in which the post-treatment liquid has a surface tension of 22.5 mN/m to 40.0 mN/m.

<4>

The inkjet recording method according to any one of <1> to <3>, in which in the step of applying the post-treatment liquid, the post-treatment liquid is applied such that an application amount per unit area is in a range of 10 $g/m^2$ to 55 $g/m^2$.

<5>

The ink jet recording method according to any one of <1> to <4>, in which the surfactant includes a nonionic surfactant.

<6>

The ink jet recording method according to any one of <1> to <5>, in which the surfactant has an HLB value of 8.0 to 14.0.

<7>

The ink jet recording method according to any one of <1> to <6>, in which the paper substrate has a basis weight of 180 $g/m^2$ to 600 $g/m^2$.

<8>

The ink jet recording method according to any one of <1> to <7>, further comprising, before the step of applying the ink, a step of applying a pre-treatment liquid onto the A surface, in which in the step of applying the ink, the ink is applied onto the A surface to which the pre-treatment liquid has been applied.

<9>

The ink jet recording method according to <8>, in which the pre-treatment liquid contains an organic acid.

According to an embodiment of the present invention, there is provided an ink jet recording method capable of suppressing occurrence of breakage in a case where an image recorded material is folded.

DESCRIPTION OF THE PREFERRED EMBODIMENTS

Hereinafter, the inkjet recording method according to the present disclosure will be described in detail.

In the present specification, a numerical range indicated using "to" means a range including numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. In addition, in a numerical range described in the present specification, an upper limit or a lower limit described in a certain numerical range may be replaced with a value described in Examples.

In the present specification, in a case where a plurality of substances corresponding to respective components in a composition are present, the amount of the respective components in the composition means the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step is not clearly distinguished from other steps.

In the present specification, the term "image" means general films, and the term "image recording" means formation of an image (that is, a film). The concept of "image" in the present specification also includes a solid image.

In the present specification, "(meth)acrylate" is a concept including both acrylate and methacrylate, "(meth) acryloyl group" is a concept including both acryloyl group and methacryloyl group, and "(meth)acrylic acid" has a concept including both acrylic acid and methacrylic acid.

[Ink jet recording method]

An ink jet recording method according to the present disclosure includes in the following order, a step of applying an ink containing a colorant and water onto an A surface which is one surface of a paper substrate by an ink jet recording system, a step of irradiating the A surface to which the ink has been applied with infrared rays having a maximal wavelength in a range of 800 nm to 3,000 nm, and a step of applying a post-treatment liquid containing water and a surfactant onto a B surface which is the other surface of the paper-based material, in which the paper substrate includes a pulp layer and a coating layer which is disposed on at least one surface of the pulp layer, the coating layer contains at least one white pigment selected from the group consisting of calcium carbonate and kaolin, and a binder, the coating layer is disposed on an A surface side and a dry coating amount of the coating layer disposed on the A surface side is 15 $g/m^2$ to 50 $g/m^2$, and the coating layer is not disposed on a B surface side, or in a case where the coating layer is disposed on the B surface side, a dry coating amount of the coating layer disposed on the B surface side is 10 $g/m^2$ or less.

As a result of intensive studies, the present inventors have found that, according to the inkjet recording method according to the present disclosure, the occurrence of breakage can be suppressed in a case where the image recorded material is folded. The reason why such an effect is obtained is presumed as follows.

Infrared rays have a large energy density and a high drying efficiency. However, after an ink is applied to a paper substrate, in a case where the surface (A surface) to which the ink has been applied is irradiated with infrared rays, even the water contained in the paper substrate is volatilized, the image recorded material itself becomes brittle, and in the coating layer and the pulp layer as an underlayer, breakage is likely to occur in a case where the image recorded material is folded. In particular, in a region on the paper substrate on which the ink is not applied, the volatilization of water is likely to proceed. In addition, in a case where a plurality of inks having different hues are applied, a difference in drying degree occurs for each ink due to a difference in absorption spectrum of the inks. For example, as compared with an ink having a hue such as yellow, magenta, and cyan, the black ink has a large amount of infrared absorption, and thus the volatilization of water is likely to proceed in a region to which the black ink is applied. In a region where the ink is not applied and a region where the black ink has been applied, there is a tendency that the breakage is more likely to occur in a case where the image recorded material is folded.

On the other hand, in the ink jet recording method according to the present disclosure, a post-treatment liquid containing water and a surfactant is applied onto a surface (B surface) of the paper substrate opposite to a surface (A surface) to which the ink has been applied. In a case where the post-treatment liquid permeates the B surface of the paper substrate, it is possible to suppress the occurrence of breakage in a case where the image recorded material is folded.

In the image forming method described in JP2017-124561A, the post-treatment liquid is jetted onto the image of the recording medium on which the image is formed. JP2020-164333A does not describe a post-treatment liquid containing water and a surfactant. Both JP2017-124561A and JP2020-164333A do not assume bending of an image recorded material.

Hereinafter, the paper substrate used in the ink jet recording method according to the present disclosure and each step will be described in detail.

<Paper substrate>

The ink jet recording method according to the present disclosure includes a step of applying an ink containing a pigment and water onto an A surface which is one surface of a paper substrate by an ink jet recording system, and a step of applying a post-treatment liquid containing water and a surfactant onto a B surface which is the other surface of the paper substrate. That is, the A surface of the paper substrate is a surface to which the ink is applied. The B surface of the paper substrate is a surface to which a post-treatment liquid is applied.

The paper substrate used in the ink jet recording method according to the present disclosure includes a pulp layer and a coating layer disposed on at least one surface of the pulp layer.

The pulp layer may be only one layer, or two or more layers may be superimposed.

The pulp layer is a layer containing pulp as a main component. Here, the main component refers to a component occupying 50% by mass or more of components constituting the pulp layer.

The type of the pulp is not particularly limited, but from the viewpoint of strength, the pulp layer preferably contains chemical pulp. Examples of the chemical pulp include broadleaved tree kraft pulp (LKP) and needle-leaved tree kraft pulp (NKP).

The pulp may be a bleached pulp or an unbleached pulp. The LKP and the NKP may each be a bleached pulp or an unbleached pulp.

Examples of the other pulps other than the NKP and the LKP include mechanical pulps such as stone ground pulp (SGP), pressurized stone ground pulp (PGW), refiner ground pulp (RGP), thermo ground pulp (TGP), chemi-ground pulp (CGP), ground pulp (GP), and thermo mechanical pulp (TMP); deinking pulp (DIP) produced from waste kraft paper, waste kraft envelopes, waste magazine, waste newspaper, waste flier paper, waste office paper, waste corrugated board, waste high-quality white paper, waste Kent paper, waste simili paper, or waste paperboard; and pulps chemically or mechanically produced from non-wood fibers such as kenaf, hemp, and reed.

The coating layer may be disposed on both surfaces of the pulp layer, or may be disposed on only one surface of the pulp layer.

In the paper substrate, a coating layer is disposed on the A surface side and a dry coating amount of the coating layer disposed on the A surface side is 15 g/m$^2$ to 50 g/m$^2$. The coating layer is not disposed on a B surface side, or in a case where the coating layer is disposed on a B surface side, a dry coating amount of the coating layer disposed on the B surface side is 10 g/m$^2$ or less. Therefore, in a case where the coating layers are disposed on both surfaces of the pulp layer, the surface on the side where the coating layer having a large dry coating amount is disposed is an A surface (that is, a surface to which the ink is applied), and the surface on the side where the coating layer having a small dry coating amount is disposed is a B surface (that is, a surface to which the post-treatment liquid is applied). In addition, in a case where the coating layer is disposed only on one surface of the pulp layer, a surface on a side where the coating layer is disposed is an A surface (that is, a surface to which ink is applied), and a surface on a side where the coating layer is not disposed is a B surface (that is, a surface to which the post-treatment liquid is applied).

In the ink jet recording method according to the present disclosure, since the dry coating amount of the coating layer disposed on the B surface side is 10 g/m$^2$ or less, the post-treatment liquid easily permeates, and the occurrence of breakage is suppressed in a case where the image recorded material is folded.

From the viewpoint of the vividness of the finish of the image recorded material, the dry coating amount of the coating layer disposed on the A surface side is preferably 15 g/m$^2$ to 40 g/m$^2$ and more preferably 15 g/m$^2$ to 30 g/m$^2$.

From the viewpoint of suppressing breakage in a case of being folded, the dry coating amount of the coating layer disposed on the B surface side is preferably 7 g/m$^2$ or less and more preferably 4 g/m$^2$ or less. The dry coating amount of the coating layer disposed on the B surface side may be 0 g/m$^2$. The dry coating amount of the coating layer disposed on the B surface side of 0 g/m$^2$ means that the coating layer is disposed only on one surface of the pulp layer.

The coating layer contains at least one white pigment selected from the group consisting of calcium carbonate and kaolin, and a binder.

The type of the binder contained in the coating layer is not particularly limited, and examples thereof include starch, a styrene-butadiene copolymer, an acrylic resin, polyvinyl acetate, and polyvinyl alcohol.

A content of the white pigment is not particularly limited, and is, for example, 50% by mass to 95% by mass with respect to the total amount of the coating layer.

A content of the binder is not particularly limited, and is, for example, 5% by mass to 50% by mass with respect to the total amount of the coating layer.

A basis weight of the paper substrate is not particularly limited, but is preferably 180 g/m$^2$ to 600 g/m$^2$ and more preferably 250 g/m$^2$ to 400 g/m$^2$.

In general, the paper substrate has a larger thickness as the basis weight is larger. A thickness of the paper substrate is not particularly limited, but is preferably 150 μm to 750 μm and more preferably 200 μm to 500 μm. In a case where the thickness of the paper substrate is large, breakage tends to occur in a case where the image recorded material is folded. According to the ink jet recording method according to the present disclosure, even in a case where the basis weight of the paper substrate is within the above-described range, that is, even in a case where the paper substrate has a large thickness, the occurrence of breakage is suppressed in a case where the image recorded material is folded.

The basis weight means a mass per 1 m$^2$ of the paper substrate. The basis weight is measured by the method described in JIS P8124:2011.

A commercially available product can be used as the paper substrate. Examples of the commercially available product include "OK Ball", "UF Coat", and "NEW Pigeon" manufactured by Oji Materia Co., Ltd.; "NEW Ultra H", "Bilite Card", "NEW Refine", "JET Ace", "JET STAR F", and "Floche White Card SF" manufactured by Nippon Paper Industries Co., Ltd.; "NEW Tough Ivory", "High Clean Coat", "NEW Clean Coat V", "NEW-DV-F", and "Maricoat-F" manufactured by Hokuetsu Corporation; "Crescendo", "TANGO", "Reliant Coated Cover", and "Carolina Coated Cover" manufactured by WestRock Company; "UPM UniquePack" and "UPM FlexPack" manufactured by UPM Specialty Papers; and "Crown Board" and "Liquid FC" manufactured by BillerudKorsnas.

<Ink applying step>

The ink jet recording method according to the present disclosure includes a step of applying an ink containing a colorant and water onto an A surface which is one surface of a paper substrate by an inkjet recording system (hereinafter, also referred to as an "ink applying step").

(Ink)

The ink to be applied in the ink applying step contains water.

A content of water is preferably 40% by mass or more, more preferably 50% by mass or more, and still more preferably 60% by mass or more with respect to the total amount of the ink. In addition, the upper limit value of the content of the water is not particularly limited, but is preferably 95% by mass or less, more preferably 90% by mass or less, and still more preferably 80% by mass or less.

The ink to be applied in the ink applying step contains at least one colorant.

Examples of the colorant include a dye and a pigment. Among these, from the viewpoint of durability such as heat resistance, light resistance, and water resistance, the colorant is preferably a pigment.

In a case where a pigment is used as the colorant, the ink can contain the pigment as a pigment dispersion liquid. The pigment dispersion liquid is a liquid obtained by dispersing the pigment in a liquid medium using a pigment dispersant, and contains at least the pigment, the dispersant, and the liquid medium. Details of the dispersant will be described later. In addition, the liquid medium may be water or may be an organic solvent.

The pigment may be an organic pigment or an inorganic pigment.

Examples of the organic pigment include an azo pigment, a polycyclic pigment, a chelate dye, a nitro pigment, a nitroso pigment, and aniline black. Among these, the organic pigment is preferably an azo pigment or a polycyclic pigment.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In the ink, a volume average particle size of the pigment is preferably 10 nm to 200 nm, more preferably 20 nm to 180 nm, and still more preferably 30 nm to 150 nm. In a case where the volume average particle size is 200 nm or less, satisfactory color reproducibility is obtained, and jettability is improved in a case where an image is recorded by an ink jet recording system. In addition, in a case where the volume average particle size is 10 nm or more, satisfactory light resistance is obtained.

In addition, a particle size distribution of the pigment is not particularly limited, and may be any of a wide particle size distribution or a monodispersed particle size distribution. Furthermore, two or more pigments each having a monodispersed particle size distribution may be used as a mixture.

The volume average particle size and the particle size distribution of the pigment are values measured by a grain size distribution measuring device (for example, Microtrac UPA (registered trademark) EX150 manufactured by NIKKISO CO., LTD.).

A content of the colorant is preferably 1% by mass to 20% by mass and more preferably 1% by mass to 10% by mass with respect to the total amount of the ink.

In a case where the ink to be applied in the ink applying step contains a pigment, in order to disperse the pigment in water, the ink preferably contains a pigment dispersant. In the present disclosure, the pigment dispersant is a compound having a function of dispersing a pigment. The pigment dispersant is adsorbed on the surface of the pigment, at least a part of the surface of the pigment is coated, and thus the pigment can be dispersed in water. In a case where a self-dispersing pigment that can be dispersed in water even in the absence of a pigment dispersant is used as the pigment, the ink may not contain a pigment dispersant.

The form of the pigment dispersant contained in the ink is not particularly limited and may be any of a random polymer, a block polymer, or a graft polymer. In addition, the pigment dispersant may be a polymer having a crosslinking structure. Among these, the pigment dispersant is preferably a polymer having a crosslinking structure. In a case where the pigment dispersant is a polymer having a crosslinking structure, it is considered that the pigment dispersant is unlikely to escape from the surface of the pigment, and the dispersion stability of the pigment is high.

In the present disclosure, the polymer denotes a compound having a weight-average molecular weight of 1000 or greater.

In the present disclosure, the weight-average molecular weight (Mw) denotes a value measured by gel permeation chromatography (GPC). The measurement according to gel permeation chromatography (GPC) is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID × 15 cm), and tetrahydrofuran (THF) as an eluent. In addition, the measurement is performed under measurement conditions of a sample concentration of 0.45% by mass, a flow rate of 0.35 ml/min, a sample injection volume of 10 μl, and a measurement temperature of 40°C using an RI detector. The calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

In the ink, from the viewpoint of dispersion stability, a content of the dispersant with respect to the content of the pigment is preferably 0.5 to 3.0 and more preferably 1.0 to 2.0 on a mass basis.

From the viewpoint of improving jettability, the ink to be applied in the ink applying step preferably contains at least one organic solvent.

Examples of the organic solvent include polyhydric alcohol such as glycerin, 1,2,6-hexanetriol, trimethylolpropane, alkanediol (for example, ethylene glycol, 1,2-propanediol), 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, 4-methyl-1,2-pentanediol, and the like), and polyalkylene glycol (for example, diethylene glycol, triethylene glycol, tetraethylene glycol, pentaethylene glycol, dipropylene glycol, polyoxyethylene polyoxypropylene glycol, and the like); polyalkylene glycol ether (for example, diethylene glycol monoalkyl ether, triethylene glycol monoalkyl ether, tripropylene glycol monoalkyl ether, polyoxypropylene glyceryl ether, and the like); and an alkyl alcohol having 1 to 4 carbon atoms, 2-pyrrolidone, and N-methyl-2-pyrrolidone.

The content of the organic solvent is preferably 0.5% by mass to 30% by mass, more preferably 1% by mass to 20% by mass, and still more preferably 1% by mass to 15% by mass with respect to the total amount of the ink.

From the viewpoint of improving j ettability, the ink to be applied in the ink applying step preferably contains at least one water-soluble resin.

In the present disclosure, the "water-soluble" in the water-soluble resin means a property that the amount dissolved in 100 g of water at 25°C is 1 g or more.

The water-soluble resin preferably contains a water-soluble resin X1 containing an alkyl group having 1 to 3 carbon atoms, an anionic group, and a cyclic structure.

In a case where the water-soluble resin contains the water-soluble resin X1, a proportion of the water-soluble resin X1 with respect to the total amount of the water-soluble resin is preferably 50% by mass to 100% by mass, more preferably 60% by mass to 100% by mass, and still more preferably 80% by mass to 100% by mass.

The alkyl group having 1 to 3 carbon atoms in the water-soluble resin X1 is a methyl group, an ethyl group, or a propyl group (that is, an n-propyl group or an i-propyl group), and a methyl group or an ethyl group is preferable and a methyl group is more preferable.

The water-soluble resin X1 may contain only one type of the alkyl group having 1 to 3 carbon atoms, or may contain two or more types thereof.

The alkyl group having 1 to 3 carbon atoms in the water-soluble resin X1 may be introduced into the structure of the water-soluble resin X1 by polymerizing a polymerizable monomer containing an alkyl group having 1 to 3 carbon atoms.

That is, the water-soluble resin X1 may contain a structural unit derived from a polymerizable monomer containing an alkyl group having 1 to 3 carbon atoms.

The polymerizable monomer containing an alkyl group having 1 to 3 carbon atoms is preferably a (meth)acrylic acid alkyl ester in which an alkyl group in an alkyl ester structure has 1 to 3 carbon atoms [hereinafter, also referred to as "(meth)acrylic acid C1-3 alkyl ester"].

Specifically, the (meth)acrylic acid C1-3 alkyl ester is methyl (meth)acrylate, ethyl (meth)acrylate, n-propyl (meth)acrylate, or i-propyl (meth)acrylate.

As the (meth)acrylic acid C1-3 alkyl ester, methyl (meth)acrylate or ethyl (meth)acrylate is preferable, and methyl (meth)acrylate is more preferable.

In addition, as the (meth)acrylic acid C1-3 alkyl ester, a methacrylic acid C1-3 alkyl ester is preferable.

In a case where the water-soluble resin X1 contains a (meth)acrylic acid C1-3 alkyl ester unit, the water-soluble resin X1 may contain one type of the (meth)acrylic acid C1-3 alkyl ester unit, or two or more types thereof.

A content of the (meth)acrylic acid C1-3 alkyl ester unit in the water-soluble resin X1 is preferably 3% by mass to 80% by mass, more preferably 3% by mass to 50% by mass, and still more preferably 5% by mass to 50% by mass with respect to the total amount of the water-soluble resin X1.

-Anionic group-

Examples of the anionic group in the water-soluble resin X1 include an acid group (for example, a carboxy group, a sulfo group, a phosphoric acid group, and the like) and a salt of the acid group (for example, a salt of the carboxy group, a salt of the sulfo group, and a salt of the phosphoric acid group).

The anionic group contained in the water-soluble resin X1 may be used alone or in combination of two or more types thereof.

The water-soluble resin X1 may contain both the acid group and the salt of the acid group as the anionic group.

The salt of the acid group (for example, the salt of the carboxy group, the salt of the sulfo group, and the salt of the phosphoric acid group) can be formed by neutralizing the acid group (for example, the carboxy group, the sulfo group, and the phosphoric acid group) with a neutralizing agent.

The acid group may be neutralized before the polymerization of the polymerizable monomer containing an acid group, or after the polymerizable monomer is polymerized.

Examples of the neutralizing agent for neutralizing the acid group include inorganic bases such as an alkali metal hydroxide and an alkaline earth metal hydroxide, and organic bases such as an organic amine.

Examples of the alkali metal include potassium (K) and sodium (Na).

Examples of the alkaline earth metal include calcium (Ca) and magnesium (Mg).

Examples of the alkali metal hydroxides include potassium hydroxide and sodium hydroxide.

Examples of the alkaline earth metal hydroxides include calcium hydroxide and magnesium hydroxide.

Examples of the organic amines include ammonia, a primary amine (for example, ethylamine, monoethanolamine, and the like), a secondary amine (for example, diethylamine, ethylenediamine, and the like), and a tertiary amine (for example, triethylamine, triethanolamine, isopropylethylamine, pyrrolidine, piperidine, and the like), and a quaternary ammonium salt. Among these, as the organic amine, an organic amine having a boiling point of 80°C or more is preferable from the viewpoint of storage stability.

From the viewpoint of the storage stability, the neutralizing agent is preferably an alkali metal hydroxide or an organic amine, and more preferably an alkali metal hydroxide or an organic amine having a boiling point of 80°C or more.

Examples of the organic amine having a boiling point of 80°C or more include ethylenediamine (117°C), triethylamine (90°C), monoethanolamine (170°C), triethanolamine (208°C), isopropylethylamine (127°C), and pyrrolidine (87°C), and piperidine (106°C).

The water-soluble resin X1 preferably contains at least one of a carboxy group or a salt of a carboxy group as the anionic group.

In this case, a proportion (% by mole; hereinafter, also referred to as a degree of neutralization) of the salt of the carboxy group to the total of the carboxy group and the salt of the carboxy group is 40% by mole or more, preferably 50% by mole or more, more preferably 60% by mole or more, and even more preferably 80% by mole or more.

In addition, the upper limit of the degree of neutralization can be 100% by mole.

The anionic group which can be contained in the water-soluble resin X1 may be introduced into the structure of the water-soluble resin X1 by polymerizing a polymerizable monomer containing an anionic group (and, as necessary, neutralizing the polymerizable monomer with a neutralizing agent).

That is, the water-soluble resin X1 may contain a structural unit derived from a polymerizable monomer containing an anionic group.

As the polymerizable monomer containing an anionic group, (meth)acrylic acid is particularly preferable.

In a case where the water-soluble resin X1 contains a structural unit derived from a polymerizable monomer containing anionic group (for example, (meth)acrylic acid), a content of the structural unit derived from a polymerizable monomer containing anionic group is preferably 5% by mass to 40% by mass, and more preferably 8% by mass to 20% by mass with respect to the total amount of the water-soluble resin X1.

The cyclic structure in the water-soluble resin X1 preferably includes at least one of an aromatic ring or an aliphatic ring, and more preferably includes an aromatic ring.

The water-soluble resin X1 may contain only one type of the cyclic structure, or may contain two or more types thereof.

In the present disclosure the aromatic ring means a cyclic unsaturated ring having aromaticity.

Examples of the aromatic ring include aromatic hydrocarbon rings such as a benzene ring, a naphthalene ring, an anthracene ring, and a pyrene ring; and heteroaromatic rings such as a pyridine ring, a pyrrole ring, a furan ring, a thiophene ring, an imidazolyl ring, and an acridone ring.

Among these, the aromatic ring is preferably an aromatic hydrocarbon ring.

In a case where the cyclic structure in the water-soluble resin X1 contains an aromatic ring, the aromatic ring can be introduced into the structure of the water-soluble resin X1 by polymerizing a polymerizable monomer containing an aromatic ring.

As the polymerizable monomer containing an aromatic ring, a polymerizable monomer containing an aromatic ring and an ethylenically unsaturated double bond is preferable, and a vinyl polymerizable monomer containing an aromatic ring is more preferable.

Examples of the polymerizable monomer containing an aromatic ring include styrene, methylstyrene, divinylbenzene, vinylpyridine, diallyl phthalate, and (meth)acrylates containing an aromatic ring (for example, benzyl acrylate, phenoxyethyl acrylate, and the like).

The polymerizable monomer containing an aromatic ring may be unsubstituted, or may be a substituted polymerizable monomer substituted with a substituent. Examples of the substituent include a halogen atom, an alkyl group, a carboxylic acid group, and a hydroxyl group.

Examples of the halogen atom include a chlorine atom, a bromine atom, and an iodine atom.

As the alkyl group, an alkyl group having 1 to 12 carbon atoms (preferably 1 to 8 carbon atoms) is preferable, and examples thereof include a methyl group, an ethyl group, a propyl group, a butyl group, and a hexyl group. The alkyl group may be unsubstituted or may have a substituent same as the substituents described above.

Specific examples of the structural unit derived from a polymerizable monomer containing an aromatic ring, which can be contained in the water-soluble resin X1, are the same as the specific examples of the structural unit derived from a polymerizable monomer containing an aromatic ring, which can be contained in the pigment dispersion resin described above.

A content of the structural unit derived from a polymerizable monomer containing a cyclic structure (for example, an aromatic ring) in the water-soluble resin X1 is preferably 50% by mass to 85% by mass, and more preferably 60% by mass to 80% by mass with respect to the total amount of the water-soluble resin X1.

The water-soluble resin X1 particularly preferably includes a structural unit derived from a (meth)acrylic acid C1-3 alkyl ester [that is, a (meth)acrylic acid alkyl ester having an alkyl group having 1 to 3 carbon atoms in the alkyl ester structure], a structural unit derived from a (meth)acrylic acid, and a structural unit derived from a polymerizable monomer having a cyclic structure.

A preferred content of each structural unit in this aspect is as described above.

In the above-described aspect, the concept of "structural unit derived from (meth)acrylic acid" includes both the structural unit obtained by polymerizing (meth)acrylic acid (that is, structural unit containing a carboxy group) and the structural unit obtained by polymerizing and neutralizing (meth)acrylic acid (that is, structural unit containing a salt of the carboxy group) (here, the neutralization may be performed before or after polymerization).

A weight-average molecular weight of the water-soluble resin X1 is preferably 5,000 to 100,000. In a case where the weight-average molecular weight of the water-soluble resin X1 is within the above-described range, blurring and blocking of an image are further suppressed. In addition, the jettability of the ink is more excellent.

The weight-average molecular weight of the water-soluble resin X1 is more preferably 10,000 to 80,000 in terms of the jettability of the ink, and still more preferably 10,000 to 30,000.

The ink to be applied in the ink applying step preferably contains a surfactant. The type of the surfactant is not particularly limited, and may be any of an anionic surfactant, a cationic surfactant, a betaine-based surfactant, or a nonionic surfactant.

A content of the surfactant is preferably 0.1% by mass to 5% by mass and more preferably 0.5% by mass to 3% by mass with respect to the total amount of the ink.

The ink to be applied in the ink applying step may contain, as necessary, an additive such as wax, colloidal silica, an antifoaming agent, a co-sensitizer, an ultraviolet absorber, an antioxidant, a fading inhibitor, a conductive salt, and a basic compound.

The surface tension of the ink to be applied in the ink applying step is preferably 60 mN/m or less, more preferably 20 mN/m to 50 mN/m, and still more preferably 25 mN/m to 45 mN/m.

The surface tension of the ink is measured at a temperature of 25°C using a surface tensiometer, for example, an automatic surface tensiometer (trade name "DY-300") manufactured by Kyowa Interface Science Co., Ltd.

The viscosity of the ink to be applied in the ink applying step is preferably 1.2 mPa s to 15.0 mPa·s, more preferably 2.0 mPa·s to 13.0 mPa·s, and still more preferably 2.5 mPa·s to 10.0 mPa s.

The viscosity of the ink is measured at a temperature of 30°C using a rotary viscometer, for example, a product name "VISCOMETER TV-22" manufactured by Toki Sangyo Co., Ltd.

From the viewpoint of storage stability of the ink, a pH of the ink to be applied in the ink applying step is preferably 6.0 to 11.0, more preferably 7.0 to 10.0, and still more preferably 7.0 to 9.0.

The pH of the ink is measured at a temperature of 25°C using a pH meter, for example, a product name "WM-50EG" manufactured by DKK-TOA CORPORATION.

(Ink jet recording system)

The inkjet recording system is not particularly limited as long as it is a system capable of recording an image, and a known system can be used. Examples of the ink jet recording system include an electric charge control system of ejecting ink by using an electrostatic attraction force; a drop-on-demand system (pressure pulse system) of using a vibration pressure of a piezo element; an acoustic inkjet system of converting an electric signal into an acoustic beam, irradiating ink, and ejecting the ink using a radiation pressure; and a thermal inkjet (Bubble jet (registered trademark)) system of heating ink to form air bubbles and utilizing the generated pressure.

Examples of inkjet heads used in the ink jet recording system include inkjet heads for a shuttle system of using short serial heads that are caused to scan a substrate in a width direction of the substrate to perform recording and inkjet heads for a line system of using line heads that each consist of recording elements arranged for the entire area of each side of a substrate.

In the line system, pattern formation can be performed on the entire surface of a substrate by scanning the substrate in a direction perpendicular to a direction in which the recording elements are arranged, and a transport system such as a carriage that scans a short head is unnecessary. In addition, in the line system, complicated scanning control for moving a carriage and a substrate is not necessary, and only a substrate moves. Therefore, the recording speed can be further increased in the line system than in the shuttle system.

A liquid droplet volume of the ink jetted from the inkjet head is preferably 1 pL (picoliter) to 100 pL, more preferably 1 pL to 10 pL, and still more preferably 1 pL to 5 pL.

<Infrared ray irradiating step>

The ink jet recording method according to the present disclosure includes a step of irradiating the A surface to which the ink has been applied with infrared rays having a maximal wavelength in a range of 800 nm to 3,000 nm (hereinafter, also referred to as an "infrared ray irradiating step").

The ink applied in the ink applying step is dried by the irradiation with infrared rays.

The maximal wavelength in the infrared rays means a wavelength at which the radiation energy density is maximized. The maximal wavelength is calculated from the radiator temperature in accordance with "Planck's radiation law". For example, in a case where the radiator is a filament, a maximal wavelength at a filament temperature of 1,200°C is 2,415 nm, and a maximal wavelength at 3,500°C is 828 nm.

From the viewpoint of improving the rub resistance of the image, the infrared rays are preferably near-infrared rays having a maximal wavelength in a range of 800 nm to 1,400 nm.

The irradiation energy of the infrared rays is not particularly limited, but from the viewpoint of drying properties, the irradiation energy is preferably 50 kJ/m$^2$ to 500 kJ/m$^2$, more preferably 60 kJ/m$^2$ to 400 kJ/m$^2$, and particularly preferably 70 kJ/m$^2$ to 300 kJ/m$^2$.

An irradiation method with infrared rays is not particularly limited, and the irradiation can be performed using, for example, a device such as a normal infrared lamp, a xenon flash lamp, a xenon lamp, a xenon short arc lamp, a near-infrared halogen heater, an infrared LED, or an infrared laser.

<Post-treatment liquid applying step>

The ink jet recording method according to the present disclosure includes a step of applying a post-treatment liquid containing water and a surfactant on a B surface, which is the other surface of the paper substrate (hereinafter, also referred to as a "post-treatment liquid applying step").

The post-treatment liquid to be applied in the post-treatment liquid applying step includes water.

A content of water is preferably 90% by mass or more, more preferably 95% by mass or more, and still more preferably 98% by mass or more with respect to the total amount of the post-treatment liquid. In addition, the upper limit value of the content of water is not particularly limited, and is, for example, 99.95% by mass.

The post-treatment liquid to be applied in the post-treatment liquid applying step contains at least one surfactant.

The type of the surfactant is not particularly limited, and may be any of an anionic surfactant, a cationic surfactant, a betaine-based surfactant, or a nonionic surfactant.

Examples of the anionic surfactant include a fatty acid salt, an alkyl sulfate ester salt, an alkylbenzene sulfonate, an alkylnaphthalene sulfonate, a dialkyl sulfosuccinate, an alkylphosphate ester salt, a naphthalenesulfonic formalin condensate, and a polyoxyethylene alkyl sulfate ester salt.

Examples of the cationic surfactant include an alkyltrimethylammonium salt, a dialkyldimethylammonium salt, an alkylpyridinium salt, an alkyl quaternary ammonium salt, an alkyldimethylbenzylammonium salt, an alkylisoquinolinium salt, a dialkylmorphonium salt, a polyoxyethylene alkylamine, an alkylamine salt, a polyamine fatty acid derivative, an amyl alcohol fatty acid derivative, benzalkonium chloride, and benzethonium chloride.

Examples of the betaine-based surfactant include palm alkyl dimethyl amine oxide and fatty acid amide propyl dimethyl amine oxide.

Examples of the nonionic surfactant include polyoxyethylene higher alkyl ether, polyoxyethylene higher alkyl phenyl ether, polyoxyethylene glycol higher fatty acid diester, acetylene glycol-based surfactant, silicone-based surfactant, and fluorine-based surfactant.

Among these, the surfactant is preferably a nonionic surfactant. In a case where the post-treatment liquid contains a nonionic surfactant, since the post-treatment liquid is easily permeated into the B surface of the paper substrate, the effect of suppressing the occurrence of breakage in a case where the image recorded material is folded is high.

In addition, the surfactant preferably has a hydrophile-lipophile balance (HLB) value of 8.0 to 14.0, and more preferably has a HLB value of 9.0 to 13.0. In a case where the HLB value of the surfactant is within the above-described range, since the post-treatment liquid is easily permeated into the B surface of the paper substrate, the effect of suppressing the occurrence of breakage in a case where the image recorded material is folded is high.

In a case where the post-treatment liquid contains two or more types of surfactants, it is preferable that a weighted average value of HLB values of the respective surfactants is within the above-described range.

The HLB value is calculated by the following Kawakami expression.

$$HLB = 7 + 11.7\log(Mw/Mo)$$

Here, Mw is the molecular weight of the hydrophilic group, and Mo is the molecular weight of the hydrophobic group.

In the present disclosure, in a case where a catalog value of the HLB value can be confirmed, the catalog value is adopted as a priority.

The post-treatment liquid to be applied in the post-treatment liquid applying step may contain, as necessary, additives such as a co-sensitizer, an ultraviolet absorbing agent, an antioxidant, a fading inhibitor, a conductive salt, and a basic compound.

The surface tension of the post-treatment liquid to be applied in the post-treatment liquid applying step is preferably 20.0 mN/m to 45.0 mN/m, more preferably 22.5 mN/m to 40.0 mN/m, and still more preferably 25.0 mN/m to 35.0 mN/m. A measuring method of the surface tension of the post-treatment liquid is the same as the measuring method of the surface tension of the ink.

In a case where the surface tension of the post-treatment liquid is within the above-described range, since the post-treatment liquid is easily permeated into the B surface of the paper substrate, the effect of suppressing the occurrence of breakage in a case where the image recorded material is folded is high.

A method of applying the post-treatment liquid is not particularly limited, and examples thereof include known methods such as a coating method, a dipping method, flexographic printing method, and an ink jet recording system.

The application amount of the post-treatment liquid per unit area is preferably 3 $g/m^2$ to 70 $g/m^2$ and more preferably 10 $g/m^2$ to 55 $g/m^2$. In a case where the application amount is 3 $g/m^2$ or more, the occurrence of breakage in a case where the image recorded material is folded is further suppressed. On the other hand, in a case where the application amount is 70 $g/m^2$ or less, the breaking strength of the image recorded material is high, and the image recorded material can be prevented from being broken in the apparatus.

In the ink jet recording method according to the present disclosure, since the occurrence of breakage in a case where the image recorded material is folded is suppressed by permeation of the post-treatment liquid into the paper substrate, it is preferable that a step of heating and drying the post-treatment liquid is not provided after the post-treatment liquid applying step.

<Pre-treatment liquid applying step>

From the viewpoint of improving the rub resistance of the image, the ink jet recording method according to the present disclosure preferably includes a step of applying a pre-treatment liquid onto the A surface (hereinafter, also referred to as a "pre-treatment liquid applying step") before the ink applying step. In a case of including the pre-treatment liquid applying step, in the ink applying step, the ink is applied onto the A surface to which the pre-treatment liquid has been applied.

The pre-treatment liquid to be applied in the pre-treatment liquid applying step preferably contains a coagulating agent. The coagulating agent is not particularly limited as long as the coagulating agent is a component that aggregates the components in the ink. The coagulating agent contains preferably at least one selected from the group consisting of a polyvalent metal compound, an organic acid, a metal complex, and a cationic polymer and more preferably an organic acid.

-Polyvalent metal compound-

Examples of the polyvalent metal compound include salts of alkaline earth metals of a group 2 (such as magnesium and calcium) in the periodic table, transition metals of a group 3 (such as lanthanum) in the periodic table, metals of a group 13 (such as aluminum) in the periodic table, and lanthanides (such as neodymium).

As salts of these metals, salts of organic acids, a nitrate, a chloride, and a thiocyanate described below are preferable.

Among these, preferred examples of the polyvalent metal compound include a calcium salt or magnesium salt of an organic acid (such as formic acid, acetic acid, or a benzoic acid), a calcium salt or magnesium salt of nitric acid, calcium chloride, magnesium chloride, and a calcium salt or magnesium salt of thiocyanic acid.

It is preferable that at least a part of the polyvalent metal compound is dissociated into polyvalent metal ions and counterions in the pre-treatment liquid.

-Organic acid-

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

It is preferable that at least a part of the acidic group is dissociated in the pre-treatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or more. In addition, it is more preferable that the organic acid has a high buffer capacity in a pH region with a pKa lower than the pKa of a functional group (for example, a carboxy group) that stably disperses particles in the ink.

-Metal complex-

It is preferable that the metal complex contains at least one selected from the group consisting of zirconium, aluminum, and titanium as a metal element.

As the metal complex, a metal complex including at least one selected from the group consisting of acetate, acetylacetonate, methylacetoacetate, ethylacetoacetate, octylene glycolate, butoxyacetylacetonate, lactate, a lactate ammonium salt, and triethanol aminate as a ligand is preferable.

The metal complex may be a commercially available product. Various organic ligands, particularly various multidentate ligands that are capable of forming metal chelate catalysts are commercially available. Accordingly, the metal complex may be a metal complex prepared by combining a commercially available organic ligand with a metal.

Examples of the metal complex include zirconium tetraacetyl acetonate (for example, "ORGATIX ZC-150", manufactured by Matsumoto Fine Chemical Co., Ltd.), zirconium monoacetyl acetonate (for example, "ORGATIX ZC-540", manufactured by Matsumoto Fine Chemical Co., Ltd.), zirconium bisacetyl acetonate (for example, "ORGATIX ZC-550", manufactured by Matsumoto Fine Chemical Co., Ltd.), zirconium monoethyl acetoacetate (for example, "ORGATIX ZC-560", manufactured by Matsumoto Fine Chemical Co., Ltd.), zirconium acetate (for example, "ORGATIX ZC-115", manufactured by Matsumoto Fine Chemical Co., Ltd.), titanium diisopropoxy bis(acetylacetonate) (for example, "ORGATIX TC-100", manufactured by Matsumoto Fine Chemical Co., Ltd.), titanium tetraacetyl acetonate (for example, "ORGATIX TC-401", manufactured by Matsumoto Fine Chemical Co., Ltd.), titanium dioctyloxy bis(octylene glycolate) (for example, "ORGATIX TC-200", manufactured by Matsumoto Fine Chemical Co., Ltd.), titanium diisopropoxy bis(ethylacetoacetate) (for example, "ORGATIX TC-750", manufactured by Matsumoto Fine Chemical Co., Ltd.), zirconium tetraacetyl acetonate (for example, "ORGATIX ZC-700", manufactured by Matsumoto Fine Chemical Co., Ltd.), zirconium tributoxy monoacetyl acetonate (for example, "ORGATIX ZC-540", manufactured by Matsumoto Fine Chemical Co., Ltd.), zirconium monobutoxy acetyl acetonate bis(ethylacetoacetate) (for example, "ORGATIX ZC-570", manufactured by Matsumoto Fine Chemical Co., Ltd.), zirconium dibutoxy bis(ethylacetoacetate) (for example, "ORGATIX ZC-580", manufactured by Matsumoto Fine Chemical Co., Ltd.), aluminum trisacetyl acetonate (for example, "ORGATIX AL-80", manufactured by Matsumoto Fine Chemical Co., Ltd.), titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.).

Among these, titanium lactate ammonium salt (for example, "ORGATIX TC-300", manufactured by Matsumoto Fine Chemical Co., Ltd.), titanium lactate (for example, "ORGATIX TC-310, 315", manufactured by Matsumoto Fine Chemical Co., Ltd.), titanium triethanol aminate (for example, "ORGATIX TC-400", manufactured by Matsumoto Fine Chemical Co., Ltd.), and a zirconyl chloride compound (for example, "ORGATIX ZC-126", manufactured by Matsumoto Fine Chemical Co., Ltd.) are preferable as the metal complex.

-Cationic polymer-

In addition, the pre-treatment liquid may be in a form containing one or two or more types of cationic polymers as an aggregating component. It is preferable that the cationic polymer is a homopolymer of a cationic monomer containing a primary to tertiary amino group or a quaternary ammonium base, or a copolymer or a condensed polymer of a cationic monomer and a non-cationic monomer. The cationic polymer may be used in any form of a water-soluble polymer or water-dispersible latex particles.

Examples of the cationic polymer include a polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of the viscosity of the pre-treatment liquid, it is preferable that the weight-average molecular weight of the cationic polymer is small. In a case where the pre-treatment liquid is applied to a recording medium by an ink jet recording system, the weight-average molecular weight thereof is preferably 1,000 to 500,000, more preferably 1,500 to 200,000, and still more preferably 2,000 to 100,000. It is advantageous that the weight-average molecular weight thereof is 1,000 or greater from the viewpoint of aggregation rate. It is advantageous that the weight-average molecular weight thereof is 500,000 or less from the viewpoint of jetting reliability. However, in a case where the pre-treatment liquid is applied to a recording medium by a method other than the ink jet recording system, the weight-average molecular weight thereof is not limited thereto.

The pre-treatment liquid may contain only one or two or more types of coagulating agents.

The content of the aggregating agent is preferably 0.1% by mass to 40% by mass, more preferably 0.1% by mass to 30% by mass, still more preferably 1% by mass to 20% by mass, and particularly preferably 1% by mass to 10% by mass with respect to the total amount of the pre-treatment liquid.

The pre-treatment liquid to be applied in the pre-treatment liquid applying step preferably contains water. The content of water is not particularly limited and is, for example, 40% by mass to 70% by mass.

The pre-treatment liquid to be applied in the pre-treatment liquid applying step may contain other components in addition to the coagulating agent and water as necessary. Examples of other components that may be contained in the pre-treatment liquid include known additives such as an organic solvent, resin particles, a surfactant, a solid wetting agent, colloidal silica, an inorganic salt, a fading inhibitor, an emulsification stabilizer, a penetration enhancer, an ultraviolet absorbing agent, a preservative, a fungicide, a pH adjuster, a viscosity adjuster, a rust inhibitor, a chelating agent, and a water-soluble polymer compound (for example, water-soluble polymer compounds described in paragraphs 0026 to 0080 of JP2013-001854A).

The pH of the pre-treatment liquid is preferably 0.1 to 4.5, more preferably 0.2 to 4.0, from the viewpoint of the aggregation rate of the ink. A measuring method of the pH of the pre-treatment liquid is the same as the measuring method of the pH of the ink.

From the viewpoint of the aggregation rate of the ink, the viscosity of the pre-treatment liquid is preferably 0.5 mPa's to 10 mPa's and more preferably 1 mPa's to 5 mPa s. The viscosity is a value measured at 25°C using a viscometer. A measuring method of the viscosity of the pre-treatment liquid is the same as the measuring method of the viscosity of the ink.

The surface tension of the pre-treatment liquid is preferably 60 mN/m or less, more preferably 20 mN/m to 50 mN/m, and still more preferably 30 mN/m to 45 mN/m. A measuring method of the surface tension of the pre-treatment liquid is the same as the measuring method of the surface tension of the ink.

A method of applying the pre-treatment liquid is not particularly limited, and examples thereof include known methods such as a coating method, a dipping method, and an ink jet recording system.

Examples of the coating method include known coating methods using a bar coater, an extrusion die coater, an air doctor coater, a blade coater, a rod coater, a knife coater, a squeeze coater, and a reverse roll coater.

After the application of the pre-treatment liquid, the pre-treatment liquid applied onto the paper substrate may be heated and dried. Examples of the means for heating and drying the pre-treatment liquid include known heating means such as a heater, known air blowing means such as a dryer, and means for combining these.

Examples of the method of heating and drying the pre-treatment liquid include a method of applying heat using a heater or the like from a side of the paper substrate opposite to the surface onto which the pre-treatment liquid has been applied; a method of applying warm air or hot air to the surface of the paper substrate onto which the pre-treatment liquid has been applied; a method of applying heat using an infrared heater from the surface of the paper substrate onto which the pre-treatment liquid has been applied or from a side of the paper substrate opposite to the surface onto which the pre-treatment liquid has been applied; and a method of combining a plurality of these methods.

The heating temperature of heating and drying the pre-treatment liquid is preferably 35°C or more and more preferably 40°C or more. An upper limit value of the heating temperature is not particularly limited, and is, for example, 120°C.

The time of heating and drying the pre-treatment liquid is not particularly limited, but is preferably 0.5 seconds to 60 seconds, more preferably 0.5 seconds to 20 seconds, and still more preferably 0.5 seconds to 10 seconds.

Examples

Hereinafter, the embodiments of the present invention will be described in detail with reference to examples, but the present disclosure is not limited thereto.

[Preparation of ink]

Each of the components shown in Table 1 was mixed to have the content (% by mass) shown in Table 1. Thereafter, the coarse particles were removed using a 1 μm filter to obtain a cyan ink C1, a magenta ink M1, a yellow ink Y1, and a black ink K1. Table 1 shows the average particle diameter of the pigment, the pH, the viscosity, the surface tension, and the electrical conductivity in each ink.

The details of the respective components listed in Table 1 are as follows.

· Cyan pigment dispersion liquid: product name "Pro-jet Cyan APD1000", manufactured by FUJIFILM Imaging Colorants Inc., pigment concentration of 14.0% by mass
· Magenta pigment dispersion liquid: product name "Pro-jet Magenta APD1000", manufactured by FUJIFILM Imaging Colorants Inc., pigment concentration of 14.0% by mass
· Yellow pigment dispersion liquid: product name "Pro-jet Yellow TP APD1000", manufactured by FUJIFILM Imaging Colorants Inc., pigment concentration of 15.4% by mass
· Black pigment dispersion liquid: product name "Pro-jet Black APD1000", manufactured by FUJIFILM Imaging Colorants Inc., pigment concentration of 14.0% by mass [0160] · Aqueous solution of water-soluble resin PL-1: aqueous solution of water-soluble resin prepared by the following method
· 1,2-propanediol
· Acetylene glycol-based surfactant: product name "OLFINE E1020", manufactured by Nissin Chemical Industry Co., Ltd.
· PEG6000: product name "Polyethylene glycol 6000", manufactured by FUJIFILM Wako Pure Chemical Corporation
· Aqueous dispersion liquid of ester wax: product name "CELLOSOL 524", manufactured by Chukyo Yushi Co., Ltd., concentration of solid contents of 30% by mass
· Aqueous dispersion liquid of colloidal silica: product name "SNOWTEX XS", manufactured by Nissan Chemical Corporation, concentration of solid contents of 20% by mass
· Antifoaming agent: product name "BYK-024", manufactured by BYK Japan KK

<Preparation of aqueous solution of water-soluble resin PL-1>

A 500 mL three-neck flask equipped with a stirrer, a thermometer, a reflux condenser, and a nitrogen gas introduction pipe was charged with 1,2-propanediol (35 g) and heated to 90°C under a nitrogen stream. A mixed solution obtained by mixing 5.55 g of dimethyl-2,2'-azobis(2-methylpropionate) as a polymerization initiator (product name "V-601", manufactured by FUJIFILM Wako Pure Chemical Corporation), 10.7 g of methacrylic acid (MAA), 69.3 g of methyl methacrylate (MMA), 20.0 g of isobornyl methacrylate (IBOMA), 1.63 g of dodecyl mercaptan, and 65.00 g of 1,2-propanediol was added dropwise thereto at a constant rate for 2 hours. After completion of the dropwise addition of the mixed solution, a mixture was stirred for 1 hour. Subsequently, a mixed solution obtained by mixing 1.85 g of V-601 and 24.62 g of 1,2-propanediol was added to the obtained reaction mixture, and the mixture was further stirred for 1.5 hours. 120.21 g of 1,2-propanediol was added to the obtained reaction mixture, and then 8.56 g of a 50% by mass sodium hydroxide aqueous solution was added dropwise thereto using a dropping funnel to obtain an aqueous solution of the water-soluble resin PL-1 (concentration of solid contents of 30% by mass).

The water-soluble resin PL-1 [MAA/MMA/IBOMA] had an acid value of 60 mgKOH/g and a weight-average molecular weight (Mw) of 15,000.

[Table 1]

|  | C1 | M1 | Y1 | K1 |
|---|---|---|---|---|
| Cyan pigment dispersion liquid | 21.10 | - | - | 3.40 |
| Magenta pigment dispersion liquid | - | 51.00 | - | 5.00 |
| Yellow pigment dispersion liquid | - | - | 32.80 | - |
| Black pigment dispersion liquid | - | - | - | 18.30 |
| Aqueous solution of water-soluble resin PL-1 | 14.00 | 12.00 | 14.00 | 14.00 |
| 1,2-Propanediol | 3.80 | 6.00 | 4.20 | 3.20 |
| Acetylene glycol-based surfactant | 0.90 | 0.90 | 0.90 | 0.90 |
| PEG6000 | 0.90 | 0.70 | 0.90 | 0.90 |
| Aqueous dispersion liquid of ester wax | 6.80 | 6.80 | 6.80 | 6.80 |

(continued)

|  | C1 | M1 | Y1 | K1 |
|---|---|---|---|---|
| Aqueous dispersion liquid of colloidal silica | 0.27 | 0.27 | 0.27 | 0.27 |
| Antifoaming agent | 0.01 | 0.01 | 0.01 | 0.01 |
| Water | 52.22 | 22.32 | 40.12 | 47.22 |
| Average particle diameter of pigment (nm) | 118 | 116 | 135 | 110 |
| pH [25°C] | 8.2 | 8.2 | 8.2 | 8.3 |
| Viscosity (mPa s) [30°C] | 4.8 | 5.0 | 4.8 | 4.9 |
| Surface tension (mN/m) [25°C] | 37.0 | 37.1 | 36.7 | 37.3 |
| Electrical conductivity (mS/m) [25°C] | 188 | 192 | 218 | 183 |

[Preparation of pre-treatment liquid 1]

Each of the following components was mixed, and the mixture was filtered using a 1 μm filter to obtain a pre-treatment liquid 1 having a pH of 4.3.

· Malonic acid ... 10.90% by mass
· Citric acid ... 13.40% by mass
· Diethylene glycol monobutyl ether ... 2.00% by mass
· Potassium hydroxide ... 7.30% by mass
· Antifoaming agent (product name "BYK-038", manufactured by BYK Japan KK) ... 0.05% by mass
· Polyacrylic acid having a weight-average molecular weight of 25,000 (product name "Polyacrylic acid 25,000", manufactured by FUJIFILM Wako Pure Chemical Corporation) ... 0.95% by mass
· Ion exchange water ... 65.40% by mass

[Preparation of post-treatment liquid]

The surfactant and water shown in Table 2 were mixed to have the contents (% by mass) shown in Table 2. Thereafter, the mixture was filtered through a 1 μm filter to obtain post-treatment liquids PT-1 to PT-17. Table 2 shows the type, classification, and HLB value of the surfactant.

The details of the surfactants shown in Table 2 are as follows.

· Acetylene glycol-based surfactant 1: product name "OLFINE E1010", manufactured by Nissin Chemical Industry Co., Ltd.
· Acetylene glycol-based surfactant 2: product name "OLFINE E1020", manufactured by Nissin Chemical Industry Co., Ltd.
· Polyoxyethylene lauryl ether 1: product name "EMULGEN 102KG", manufactured by Kao Corporation
· Polyoxyethylene lauryl ether 2: product name "EMULGEN 103", manufactured by Kao Corporation
· Polyoxyethylene lauryl ether 3: product name "EMULGEN 105", manufactured by Kao Corporation
· Polyoxyethylene lauryl ether 4: product name "EMULGEN 108", manufactured by Kao Corporation
· Polyoxyethylene lauryl ether 5: product name "EMULGEN 109P", manufactured by Kao Corporation
· Polyoxyethylene lauryl ether 6: product name "EMULGEN 120", manufactured by Kao Corporation
· Polyoxyethylene lauryl ether 7: product name "EMULGEN 150", manufactured by Kao Corporation
· Silicone-based surfactant: product name "BYK-347", manufactured by BYK Japan KK
· Alkylbenzenesulfonic acid: product name "PIONIN A-40", manufactured by Takemoto Oil & Fat Co., Ltd.
· Lauryl trimethylammonium chloride: product name "PIONIN B-111", manufactured by Takemoto Oil & Fat Co., Ltd.
· Fatty acid amidopropyldimethylamine oxide: product name "PIONIN C-151", manufactured by TAKEMOTO OIL & FAT Co., Ltd.

[Table 2]

| Type | Classification | HLB value | PT-1 | PT-2 | PT-3 | PT 4 | PT-5 | PT 6 | PT-1 | PT. 8 | PT. 9 | PT-10 | PT-11 | PT. 12 | P-T-13 | P-T-14 | P-T-15 | P-T-1.6 | PT-17 |
|---|---|---|---|---|---|---|---|---|---|---|---|---|---|---|---|---|---|---|---|
| Acetylene glycol-based surfactant 1 | Nonionic | 13 to 14 | 1.0 | 2.0 | 0.4 | 0.2 | 0.1 | - | - | - | - | - | - | - | - | - | - | - | - |
| Acetylene glycol-based surfactant 2 | Nonionic | 15 to 16 | - | - | - | - | - | 1.0 | - | - | - | - | - | - | - | - | - | - | - |
| Polyoxyethylene lauryl ether 1 | Nonionic | 6.3 | - | - | - | - | - | - | 1.0 | - | - | - | - | - | - | - | - | - | - |
| Polyoxyethylene lauryl ether 2 | Nonionic | 8.1 | - | - | - | - | - | - | - | 1.0 | - | - | - | - | - | - | - | - | - |
| Polyoxyethylene lauryl ether 3 | Nonionic | 9.7 | - | - | - | - | - | - | - | - | 1.0 | - | - | - | - | - | - | - | - |
| Polyoxyethylene lauryl ether 4 | Nonionic | 12.1 | - | - | - | - | - | - | - | - | - | 1.0 | - | - | - | - | - | - | - |
| Polyoxyethylene lauryl ether 5 | Nonionic | 13.6 | - | - | - | - | - | - | - | - | - | - | 1.0 | - | - | - | - | - | - |
| Polyoxyethylene lauryl ether 6 | Nonionic | 15.3 | - | - | - | - | - | - | - | - | - | - | - | 1.0 | - | - | - | - | - |
| Polyoxyethylene lauryl ether 7 | Nonionic | 18.4 | - | - | - | - | - | - | - | - | - | - | - | - | 1.0 | - | - | - | - |
| Silicone-based surfactant | Nonionic | 8.6 | - | - | - | - | - | - | - | - | - | - | - | - | - | 1.0 | - | - | - |
| Alkylberizenesulfonic acid | Anionic | - | - | - | - | - | - | - | - | - | - | - | - | - | - | - | 1.0 | - | - |
| Lauryl trimethylammonium chloride | Cationic | - | - | - | - | - | - | - | - | - | - | - | - | - | - | - | - | 1.0 | - |
| Fatty acid amidopropyldimethylamine oxide | Betaine-based | - | - | - | - | - | - | - | - | - | - | - | - | - | - | - | - | - | 1.0 |
| Water | | | 99.0 | 98.0 | 99.6 | 99.8 | 99.9 | 99.0 | 99.0 | 99.0 | 99.0 | 99.0 | 99.0 | 99.0 | 99.0 | 99.0 | 99.0 | 99.0 | 99.0 |
| Surface tension (mN/m) [25°C] | | | 29.8 | 28.6 | 35.8 | 39.6 | 44.6 | 38.9 | 22.9 | 25.5 | 26.5 | 28.0 | 32.3 | 36.8 | 50.5 | 21.1 | 39.1 | 38.9 | 38.3 |

[Preparation of image recorded material]

In Examples 1 to 29 and Comparative Examples 1 and 2, as the paper substrate, one-side coated paper (product name "UF coat", manufactured by Oji Materia Co., Ltd.) was used. The basis weight of the paper substrate used in each of Examples is shown in Table 3. In the paper substrate, a surface on which the coating layer was disposed was referred to as "A surface", and a surface on which the coating layer was not disposed was referred to as "B surface". A dry coating amount of the coating layer disposed on the A surface was about 18 g/m$^2$.

In Comparative Example 3, as the paper substrate, double-side coated paper (product name "BON IVORY +", manufactured by Oji Materia Co., Ltd., basis weight: 310 g/m$^2$) was used. The dry coating amount of the coating layers disposed on both surfaces was about 18 g/m$^2$.

(1) Pre-treatment liquid applying step

The pre-treatment liquid 1 was applied to the A surface of the paper substrate using a coating bar such that the application amount was 1.5 g/m$^2$. Two seconds after the coating, hot air at a temperature of 100°C and a wind speed of 15 m/sec was applied to the coating surface from a height of 10 cm for 5 seconds to dry the pre-treatment liquid. In Example 29, the pre-treatment liquid applying step was not performed.

(2) Ink applying step

Three seconds after drying the pre-treatment liquid, the black ink K1, the cyan ink C1, the magenta ink M1, and the yellow ink Y1 were jetted in this order onto the surface (A surface) of the paper substrate, which has been coated with the pre-treatment liquid 1 under the following conditions in a single-pass system to record an image.

<Conditions>

Ink jet head: head in which piezofluid line heads having a resolution of 1,200 dots per inch (dpi) and a width of 20 inches are arranged in four colors
Liquid droplet volume: 1.5 pL (picoliter) of each color per pixel
Driving frequency: 60 kHz (substrate transport speed: 1,270 mm/sec)

(3) Infrared ray irradiating step

Two seconds after the ink was applied onto the A surface, the A surface was irradiated with near-infrared rays having a maximal wavelength of 830 nm using a near-infrared lamp at an irradiation energy of 250 kJ/m$^2$.
In Example 24, an infrared lamp having a maximal wavelength of 2,400 nm was used instead of the near-infrared lamp.

(4) Post-treatment liquid applying step

Three seconds after the irradiation with the near-infrared rays or the infrared rays, the post-treatment liquid shown in Table 3 was applied onto the B surface of the paper substrate by a flexographic printing method such that the application amount was the amount shown in Table 3, thereby obtaining an image recorded material. In Comparative Example 1, the post-treatment liquid applying step was not performed.

[Evaluation and measurement]

Using the obtained image recorded material, the rub resistance, the folding resistance, and the strength were evaluated. The evaluation methods were as follows. Table 3 shows the evaluation results.

<Rub resistance>

A rubbing test was performed using a Gakushin type rubbing tester (manufactured by Yasuda Seiki Seisakusho Ltd.).
An image recorded material 30 seconds after the application of the post-treatment liquid was completed was fixed on the test piece stage.

An unused paper substrate (product name: UF coat, basis weight: 310 g/m$^2$, manufactured by Oji Materia Co., Ltd.) was fixed to the frictional element such that a coating layer of the unused paper substrate faced a surface of the image recorded material on which the image has been recorded.

The frictional element was placed on the test piece, and the frictional element was rubbed 10 times under a load of 240 g/cm$^2$. The image of the rubbed portion was visually observed, and the rub resistance was evaluated based on the state of the scratches and the peeling in the image of the rubbed portion. The evaluation standard was as follows. A level of 3 or more is a level with no problems in practical use.

5: No scratch was recognized in the image of the rubbed portion.
4: A scratch was slightly observed in the image of the rubbed portion.
3: The image of the rubbed portion was slightly peeled off, and an extremely fine scratch was observed.
2: The image of the rubbed portion was peeled off, and the scratch was noticeable.
1: The image of the rubbed portion was peeled off, and a part of the paper substrate was exposed.

<Folding resistance>

30 seconds after the application of the post-treatment liquid was completed, the image recorded material was folded by 180° such that the surface on which the image was recorded was on the outside. After restoring the image recorded material to the original state, a folded portion was visually observed, and the folding resistance was evaluated based on the state of breakage. The evaluation standard was as follows. A level of 3 or more is a level with no problems in practical use.

5: No breakage was observed in the folded portion.
4: Breakage was slightly observed in the folded portion.
3: Breakage was mildly observed in the folded portion.
2: Breakage was noticeable in the folded portion.
1: The folded portion was completely broken.

<Strength>

Ten minutes after the application of the post-treatment liquid was completed, the breaking strength of the image recorded material was measured in an environment of 22°C and a relative humidity of 60% using a Tensilon universal material testing machine (product name "FTF-1250", manufactured by Orientec Co., Ltd.).

In addition, the breaking strength of the paper substrate before the image recording was measured by the same method.

The strength was calculated based on the following expression.

Strength (%) = (breaking strength of image recorded material/breaking strength of paper substrate) × 100

In a case where the strength is less than 50%, a problem such as breakage of the image recorded material may occur in the apparatus.

In Table 3, the type and the basis weight of the paper substrate were described. In a case of performing the pre-treatment liquid applying step, "Y" was described, and in a case of not performing the pre-treatment liquid applying step, "N" was described. Regarding the infrared ray irradiating step, the type of the irradiation rays was described. Regarding the post-treatment liquid applying step, the type, the application amount, and the surface tension of the post-treatment liquid, and the classification, HLB value, and content of the surfactant contained in the post-treatment liquid were described. In Comparative Example 1, the post-treatment liquid applying step was not performed, and thus "-" was described in the column of the post-treatment liquid applying step. In Comparative Example 2, since water was used as the post-treatment liquid in the post-treatment liquid applying step, "-" was described in the column of the surfactant contained in the post-treatment liquid.

[Table 3]

| Example No. | Paper substrate | | Pre-treatment LAS | IR ray irradiating step | Post-treatment liquid applying step | | | | | | Evaluation | | |
|---|---|---|---|---|---|---|---|---|---|---|---|---|---|
| | | | | | Post-treatment liquid | | | Surfactant | | | | | |
| | Type | Basis weight (g/m$^2$) | Y or N | Irradiation ray | Type | Application amount (g/m$^2$) | Surface tension (mN/m) | Classification | HLB value | Content (% by mass) | Rub resistance | Folding resistance | Strength (%) |
| 1 | OSCP | 310 | Y | NIR ray | PT-1 | 30 | 29.8 | Nonionic | 13 - 14 | 1.0 | 5 | 5 | 95.5 |
| 2 | OSCP | 310 | Y | NIR ray | PT-2 | 30 | 28.6 | Nonionic | 13 - 14 | 2.0 | 5 | 5 | 93.2 |
| 3 | OSCP | 310 | Y | NIR ray | PT-3 | 30 | 34.6 | Nonionic | 13 - 14 | 0.3 | 5 | 4 | 96.4 |
| 4 | OSCP | 310 | Y | NIR ray | PT-4 | 30 | 39.6 | Nonionic | 13 - 14 | 0.2 | 5 | 4 | 96.8 |
| 5 | OSCP | 310 | Y | NIR ray | PT-5 | 30 | 44 6 | Nonionic | 13 - 14 | 0.1 | 5 | 3 | 96.8 |
| 6 | OSCP | 310 | Y | NIR ray | PT-6 | 30 | 38.9 | Nonionic | 15 - 16 | 1.0 | 5 | 4 | 96.4 |
| 7 | OSCP | 310 | Y | NIR ray | PT-7 | 30 | 22.9 | Nonionic | 6.3 | 1.0 | 5 | 4 | 95.5 |
| 8 | OSCP | 310 | Y | NIR ray | PT-8 | 30 | 25.6 | Nonionic | 8.1 | 1.0 | 5 | 5 | 95.0 |
| 9 | OSCP | 310 | Y | NIR ray | PT-9 | 30 | 26.5 | Nonionic | 9.7 | 1.0 | 5 | a | 95.5 |
| 10 | OSCP | 310 | Y | NIR ray | PT-10 | 30 | 28.0 | Nonionic | 12.1 | 1.0 | 5 | 5 | 94.5 |
| 11 | OSCP | 310 | Y | NIR ray | PT-11 | 30 | 32.3 | Nonionic | 13.6 | 1.0 | 5 | 5 | 95.9 |
| 12 | OSCP | 310 | Y | NIR ray | PT-12 | 30 | 36.8 | Nonionic | 15.3 | 10 | 5 | 4 | 96.4 |
| 13 | OSCP | 310 | Y | NIR ray | PT-13 | 30 | 50.5 | Nonionic | 18.4 | 1.0 | 5 | 3 | 97.3 |
| 14 | OSCP | 310 | Y | NIR ray | PT-14 | 30 | 21.1 | Nonionic | 8.6 | 1.0 | 5 | 3 | 97.7 |
| 15 | OSCP | 310 | Y | NIR ray | PT-1 | 5 | 29.8 | Nonionic | 13 - 14 | 1.0 | 5 | 3 | 97.7 |
| 16 | OSCP | 310 | Y | NIR ray | PT-1 | 10 | 29.8 | Nonionic | 13 - 14 | 10 | 5 | 4 | 97.3 |
| 17 | OSCP | 310 | Y | NIR ray | PT-1 | 15 | 29.8 | Nonionic | 13 - 14 | 1.0 | 5 | 5 | 96.4 |
| 18 | OSCP | 310 | Y | NIR ray | PT-1 | 45 | 29.8 | Nonionic | 13 - 14 | 1.0 | 5 | 5 | 86.4 |
| 19 | OSCP | 310 | Y | NIR ray | PT-1 | 55 | 29.8 | Nonionic | 13 - 14 | 1.0 | 5 | 5 | 79.1 |
| 20 | OSCP | 310 | Y | NIR ray | PT-1 | 65 | 29.8 | Nonionic | 13 - 14 | 1.0 | 5 | 5 | 67.3 |
| 21 | OSCP | 310 | Y | NIR ray | PT-15 | 30 | 39.1 | Anionic | - | 1.0 | 5 | 4 | 97.3 |

EP 4 501 655 A1

(continued)

| Example No. | Paper substrate | | Pre-treatment LAS | IR ray irradiating step | Post-treatment liquid applying step | | | | | | | Evaluation | | |
|---|---|---|---|---|---|---|---|---|---|---|---|---|---|---|
| | | | | | Post-treatment liquid | | | Surfactant | | | | | | |
| | Type | Basis weight (g/m²) | Y or N | Irradiation ray | Type | Application amount (g/m²) | Surface tension (mN/m) | Classification | HLB value | Content (% by mass) | | Rub resistance | Folding resistance | Strength (%) |
| 22 | OSCP | 310 | Y | NIR ray | PT-16 | 30 | 38.9 | Cationic | - | 1.0 | | 5 | 4 | 97.3 |
| 23 | OSCP | 310 | Y | NIR ray | PT-17 | 30 | 38.3 | Betaine-based | - | 1.0 | | 5 | 3 | 95.5 |
| 24 | OSCP | 310 | Y | NIR ray | PT-1 | 30 | 29.8 | Nonionic | 13 - 14 | 1.0 | | 3 | 5 | 99.1 |
| 25 | OSCP | 230 | Y | NIR ray | PT-1 | 30 | 29.8 | Nonionic | 13 - 14 | 1.0 | | 5 | 5 | 84.6 |
| 26 | OSCP | 270 | Y | NIR ray | PT-1 | 30 | 29.8 | Nonionic | 13 - 14 | 1.0 | | 5 | 5 | $5, 6 |
| 27 | OSCP | 400 | Y | NIR ray | PT-1 | 30 | 29.8 | Nonionic | 13 - 14 | 1.0 | | 5 | 5 | 96.8 |
| 28 | OSCP | 450 | Y | NIR ray | PT-1 | 30 | 29.8 | Nonionic | 13 - 14 | 1.0 | | 4 | 5 | 99.0 |
| 29 | OSCP | 310 | Y | NIR ray | PT-1 | 30 | 29.8 | Nonionic | 13 - 14 | 1.0 | | 4 | 5 | 100 |
| CEx 1 | OSCP | 310 | Y | NIR ray | - | - | - | - | - | - | | 5 | 1 | 100 |
| CEx 2 | OSCP | 310 | Y | NIR ray | Water | 30 | 69.2 | - | - | - | | 5 | 1 | 98.6 |
| CEx 3 | OSCP | 310 | Y | NIR ray | PT-1 | 30 | 29.8 | Nonionic | 13 - 14 | 1.0 | | 5 | 1 | 97.9 |

As shown in Table 3, in Examples 1 to 29, a step of applying an ink containing a colorant and water onto an A surface which is one surface of a paper substrate by an ink jet recording system, a step of irradiating the A surface to which the ink has been applied with infrared rays having a maximal wavelength in a range of 800 nm to 3,000 nm, and a step of applying a post-treatment liquid containing water and a surfactant onto a B surface of the paper substrate were included in this order, the paper substrate includes a pulp layer and a coating layer which is disposed on at least one surface of the pulp layer, the coating layer contains at least one white pigment selected from the group consisting of calcium carbonate and kaolin, and a binder, the coating layer is disposed on an A surface side and a dry coating amount of the coating layer disposed on the A surface side is 15 $g/m^2$ to 50 $g/m^2$, and the coating layer is not disposed on a B surface side. Therefore, it was possible to suppress the occurrence of breakage in a case where the image recorded material was folded.

On the other hand, in Comparative Example 1, since the post-treatment liquid applying step was not performed, it was found that breakage occurred in the image recorded material in a case where the image recorded material was folded.

In Comparative Example 2, since water was used as the post-treatment liquid, it was found that breakage occurred in a case where the image recorded material was folded.

In Comparative Example 3, since two-side coated paper in which the dry coating amount of the coating layer is more than 10 $g/m^2$ was used as the paper substrate, it was found that breakage occurred in a case where the image recorded material was folded.

In Example 1, since the irradiation with the near-infrared rays was performed in the infrared ray irradiating step, it was found that the image had excellent rub resistance as compared with Example 24.

In Example 1, since the surface tension of the post-treatment liquid was 22.5 mN/m or more, it was found that the effect of suppressing the occurrence of breakage in a case where the image recorded material was folded was high as compared with Example 14.

In Example 1, since the surface tension of the post-treatment liquid was 40.0 mN/m or less, it was found that the effect of suppressing the occurrence of breakage in a case where the image recorded material was folded was high as compared with Example 5.

In Example 1, since the application amount of the post-treatment liquid per unit area was set to 10 $g/m^2$ or more, it was found that the effect of suppressing the occurrence of breakage in a case where the image recorded material was folded is high as compared with Example 15.

In Example 1, since the application amount of the post-treatment liquid per unit area was set to 55 $g/m^2$ or less, it was found that the strength of the image recorded material was excellent as compared with Example 20.

In Example 1, since the surfactant contained a nonionic surfactant, it was found that the effect of suppressing the occurrence of breakage in a case where the image recorded material was folded was high as compared with Comparative Examples 21 to 23.

In Examples 8 to 11, since the HLB value of the surfactant was 8.0 or more, it was found that the effect of suppressing the occurrence of breakage in a case where the image recorded material was folded was high as compared with Example 7.

In Examples 8 to 11, since the HLB value of the surfactant was 14.0 or more, it was found that the effect of suppressing the occurrence of breakage in a case where the image recorded material was folded was high as compared with Example 12.

In Example 1, since the pre-treatment liquid applying step was performed, it was found that the rub resistance of the image was excellent as compared with Example 29.

[Preparation of pre-treatment liquid 2]

Each of the following components was mixed, and the mixture was filtered using a 1 μm filter to obtain a pre-treatment liquid 2 having a pH of 7.1.

· Calcium formate ... 4.90% by mass
· Calcium lactate pentahydrate ... 3.80% by mass
· OLFINE E1010: 0.20% by mass
· BYK-024 ... 0.01% by mass
· Ion exchange water ... 91.09% by mass

[Preparation of pre-treatment liquid 3]

Each of the following components was mixed, and the mixture was filtered using a 1 μm filter to obtain a pre-treatment liquid 3 having a pH of 7.4.

· Calcium formate ... 10.10% by mass

· Calcium lactate pentahydrate ... 8.10% by mass
· OLFINE E1010: 0.20% by mass
· BYK-024 ... 0.01% by mass
· Ion exchange water ... 81.59% by mass

<Example 30, Example 31>

An image recorded material was obtained by the same method as in Example 1, except that the pre-treatment liquid 1 was changed to the pre-treatment liquid 2 and the pre-treatment liquid 3, respectively. The evaluation was performed by the same method as in Example 1.

The evaluation results are shown in Table 4.

[Table 4]

| | Paper substrate | | Pretreatment liquid applying step | Infrared ray irradiating step | Post-treatment liquid applying step | | | | | | | Evaluation | | |
|---|---|---|---|---|---|---|---|---|---|---|---|---|---|---|
| | | | | | Post treatment liquid | | | Surfactant | | | | | | |
| | Type | Basis weight (g/m$^2$) | Type | Irradiation ray | Type | Application amount (g/m$^2$) | Surface tension (mN/m) | Classification | HLB value | Content (% by mass) | Rub resistance | Folding resistance | Strength (%) |
| Example 30 | One-side coated paper | 310 | Pretreatment liquid 2 | Near-infrared ray | PT-1 | 30 | 29.8 | Nonionic | 13 to 14 | 1.0 | 5 | 5 | 95.3 |
| Example 31 | One-side coated paper | 310 | Pretreatment liquid 3 | Near-infrared ray | PT-1 | 30 | 29.8 | Nonionic | 13 to 14 | 1.0 | 4 | 5 | 94.9 |

Also in Example 30 and Example 31, as in Example 1, it was possible to suppress the occurrence of breakage in a case where the image recorded material was folded.

The entire disclosure of Japanese Patent Application No. 2022-048836, filed March 24, 2022, is incorporated into the present specification by reference. In addition, all documents, patent applications, and technical standards described in the specification are incorporated herein by references to the same extent as the incorporation of the individual documents, patent applications, and technical standards by references are described specifically and individually.

**Claims**

1. An inkjet recording method comprising, in the following order:

    a step of applying an ink comprising a colorant and water onto an A surface which is one surface of a paper substrate by an ink jet recording system;
    a step of irradiating the A surface to which the ink has been applied with infrared rays having a maximal wavelength in a range of 800 nm to 3,000 nm; and
    a step of applying a post-treatment liquid comprising water and a surfactant onto a B surface which is the other surface of the paper substrate,
    wherein the paper substrate includes a pulp layer and a coating layer which is disposed on at least one surface of the pulp layer,
    the coating layer comprises at least one white pigment selected from the group consisting of calcium carbonate and kaolin, and a binder,
    the coating layer is disposed on an A surface side and a dry coating amount of the coating layer disposed on the A surface side is 15 g/m$^2$ to 50 g/m$^2$, and
    the coating layer is not disposed on a B surface side, or in a case where the coating layer is disposed on the B surface side, a dry coating amount of the coating layer disposed on the B surface side is 10 g/m$^2$ or less.

2. The ink jet recording method according to claim 1,
   wherein the infrared rays are near-infrared rays having a maximal wavelength in a range of 800 nm to 1,400 nm.

3. The ink jet recording method according to claim 1 or 2,
   wherein the post-treatment liquid has a surface tension of 22.5 mN/m to 40.0 mN/m.

4. The ink jet recording method according to any one of claims 1 to 3,
   wherein in the step of applying the post-treatment liquid, the post-treatment liquid is applied such that an application amount per unit area is in a range of 10 g/m$^2$ to 55 g/m$^2$.

5. The ink jet recording method according to any one of claims 1 to 4,
   wherein the surfactant includes a nonionic surfactant.

6. The ink jet recording method according to any one of claims 1 to 5,
   wherein the surfactant has an HLB value of 8.0 to 14.0.

7. The ink jet recording method according to any one of claims 1 to 6,
   wherein the paper substrate has a basis weight of 180 g/m$^2$ to 600 g/m$^2$.

8. The ink jet recording method according to any one of claims 1 to 7, further comprising, before the step of applying the ink:

    a step of applying a pre-treatment liquid onto the A surface,
    wherein in the step of applying the ink, the ink is applied onto the A surface to which the pre-treatment liquid has been applied.

9. The ink jet recording method according to claim 8,
   wherein the pre-treatment liquid comprises an organic acid.

| | | |
|---|---|---|
| **INTERNATIONAL SEARCH REPORT** | | International application No. |
| | | **PCT/JP2023/000102** |

**A.    CLASSIFICATION OF SUBJECT MATTER**

**B41M 5/00**(2006.01)i; **B41M 5/52**(2006.01)i; **B41J 2/01**(2006.01)i
FI:    B41M5/00 100; B41M5/00 134; B41M5/52 110; B41M5/00 132; B41J2/01 127; B41J2/01 123; B41J2/01 501

According to International Patent Classification (IPC) or to both national classification and IPC

**B.    FIELDS SEARCHED**

Minimum documentation searched (classification system followed by classification symbols)

B41M5/00-B41M5/52; B41J2/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2016-141733 A (FUJI XEROX CO LTD) 08 August 2016 (2016-08-08) paragraphs [0028]-[0129] | 1-9 |
| Y | JP 2016-190900 A (FUJIFILM CORP) 10 November 2016 (2016-11-10) paragraphs [0030], [0124], [0142]-[0147], [0157]-[0158] | 1-9 |

☐ Further documents are listed in the continuation of Box C.　　☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| | |
|---|---|
| Date of the actual completion of the international search | Date of mailing of the international search report |
| **02 March 2023** | **14 March 2023** |
| Name and mailing address of the ISA/JP | Authorized officer |
| **Japan Patent Office (ISA/JP)**  **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/000102**

| Patent document cited in search report | | | Publication date (day/month/year) | Patent family member(s) | | | Publication date (day/month/year) |
|---|---|---|---|---|---|---|---|
| JP | 2016-141733 | A | 08 August 2016 | US | 2016/0222240 | A1 | |
| | | | | paragraphs [0057]-[0255] | | | |
| JP | 2016-190900 | A | 10 November 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017124561 A
- JP 2020164333 A
- JP 2002012607 A
- JP 2002188025 A
- JP 2003026978 A
- JP 2003342503 A
- JP 2013001854 A
- JP 2022048836 A

**Non-patent literature cited in the description**

- Encyclopedia of Pigments. 2000
- **W. HERBST** ; **K. HUNGER**. *Industrial Organic Pigments*